# DEMANDE DE BREVET EUROPEEN

(11) **EP 1 376 534 A1**
(43) Date de publication de la demande: **02.01.2004**
(21) Numéro de dépôt: 03291457.4
(22) Date de dépôt: 17.06.2003
(51) Int. Cl.: G10K 11/172

(54) **Procédé de fabrication d'un panneau acoustique à double résonateur au moins**

(30) Priorité: 17.06.2002 FR 0207416
(71) Demandeur: Hurel-Hispano, 76700 Gonfreville l'Orcher (FR)
(72) Inventeur: Levavasseur, Jean-Luc, 76620 Le Havre (FR)
(74) Mandataire: Berrou, Paul

(57) **Abrégé**

L'invention propose un procédé de fabrication de panneaux acoustiques à double résonateur au moins utilisés par exemple sur les nacelles entourant les turboréacteurs des avions. Un tel procédé est remarquable en ce que le septum est constitué par l'assemblage d'une pluralité de pièces contre l'un des nids d'abeilles, ces pièces étant découpées dans du feuillard, ces pièces étant définies pour permettre l'approximation de la forme du septum par des surfaces développables, ces pièces permettant une réduction importante du coût de perçage du septum.

## Description

### Domaine technique de l'invention

L'invention se rapporte aux panneaux acoustiques utilisés par exemple sur les nacelles et inverseurs des avions propulsés par des turboréacteurs du type "turbofan", et plus particulièrement à un procédé économique et fiable pour fabriquer des panneaux à double résonateur au moins, c'est à dire des panneaux à double résonateur, à triple résonateur, etc.

### Etat de la technique et problème posé

Les nacelles entourant les turboréacteurs à double flux, appelés également "turbofan", forment autour du turboréacteur un conduit annulaire appelé "veine secondaire" ou "veine" dont les parois au contact du flux secondaire ont la constitution de panneaux acoustiques afin d'assurer à la fois la rigidité de la nacelle, la canalisation de l'air traversant la nacelle et l'absorption du bruit généré principalement par la soufflante. La veine a une forme générale de révolution sensiblement circulaire autour du turboréacteur et plus particulièrement de son axe géométrique, mais sa section varie de façon continue depuis l'avant jusqu'à l'arrière de la nacelle afin de réaliser le compromis optimum entre les contraintes d'écoulement du flux secondaire et celles d'encombrement de la nacelle. Les panneaux à réaliser ont en conséquence des formes galbées s'apparentant à des secteurs de coques. Par le terme "galbées", on entend que les panneaux ont une surface courbe non développable, c'est à dire que l'on ne peut développer sur un plan sans déchirure ni duplicature.

Les panneaux acoustiques sont bien connus en aéronautique. Ce sont des structures sandwich comportant dans le sens de l'épaisseur une pluralité de couches assemblées entre elles. Traditionnellement, on utilise des panneaux dits "à simple résonateur" comportant trois couches, soit : une peau multiperforée dite "acoustique", un nid d'abeilles et une peau pleine. Les couches sont assemblées entre elles par collage. La peau acoustique et la peau pleine sont par exemple en matériau composite organique comportant de 3 à 10 couches de tissu de renfort noyés dans une résine durcie par polymérisation. La peau acoustique et la peau pleine sont réalisées séparément par moulage à la forme définitive du panneau selon des techniques bien connues. La peau acoustique est ensuite percée et l'ensemble peau pleine + nid d'abeille + peau acoustique est assemblé par collage à chaud et sous pression en autoclave afin d'assurer le meilleur contact possible entre les trois couches. Dans une variante du procédé, pendant l'assemblage, la peau pleine peut être directement réalisée et moulée sur le nid d'abeille qu'elle recouvre. On comprend que les peaux maintenues séparées par le nid d'abeilles assurent la résistance et la rigidité du panneau.

Le perçage de la peau acoustique est une opération longue et coûteuse. En effet, la peau acoustique comporte de l'ordre de 100 000 trous/m2 dont le diamètre est de l'ordre de 1,5mm, ce perçage devant être effectué au foret sur une machine dite "cinq axes" de préférence à tête multibroche. Une telle machine est très coûteuse car, pour chaque trou à percer à la surface en secteur de coque du panneau, elle doit amener les moyens de perçage dans la position requise avec l'orientation requise. L'outillage est également coûteux car il doit assurer le maintien de la peau acoustique dans la forme exacte qu'elle aura su le panneau, c'est à dire en l'empêchant de se déformer.

On connaît également des panneaux acoustiques plus performants dits "à double résonateur". Ce sont des structures sandwich comportant successivement dans le sens de l'épaisseur : une peau acoustique multiperforée, un premier nid d'abeilles dit "primaire", un septum également multiperforé, un second nid d'abeilles dit "secondaire" et une peau pleine. Le septum est en composite organique comportant de 1 à 3 couches de tissu de renfort noyées dans une résine durcie par polymérisation. Au contraire des peaux, le septum est mince et souple car il participe peu à la résistance et à la rigidité du panneau, sa fonction étant par conséquent essentiellement acoustique. La fabrication des peaux et du septum, le perçage de la peau acoustique et du septum ainsi que l'assemblage du panneau sont effectués en utilisant les techniques déjà décrites pour un panneau à simple résonateur.

Bien que rarement utilisés car très coûteux, on connaît également des panneaux acoustiques comportant N > 1 septums pris en sandwich entre N + 1 nid d'abeilles, soit principalement les panneaux dits à "triple résonateur" comportant successivement dans le sens de l'épaisseur : une peau acoustique, un nid d'abeilles primaire, un septum primaire, un nid d'abeilles secondaire, un septum secondaire, un nid d'abeilles tertieire et enfin une peau pleine.

Le perçage du septum est malheureusement une opération encore plus longue et coûteuse que le perçage de la peau acoustique car les trous ont aujourd'hui un diamètre réduit de l'ordre de 0,3mm et le septum comporte typiquement de l'ordre de 800 000 trous/m², un panneau typique de 6m² comportant en conséquence de l'ordre de 8 000 000 (8x10⁶) de trous à percer. Le perçage du septum est aujourd'hui effectué comme le perçage de la peau acoustique, en utilisant toutefois un faisceau laser en remplacement du foret. Ainsi, l'utilisation sur les nacelles de panneaux acoustiques à double résonateur au moins, en remplacement de panneaux acoustiques à simple résonateur, entraîne un coût supplémentaire très important.

Le problème à résoudre est de réduire le coût supplémentaire de fabrication des panneaux acoustiques lorsqu'ils sont à double résonateur au moins, en remplacement de panneaux à simple résonateur.

### Exposé de l'invention

Pour résoudre ce problème, l'invention propose un procédé de fabrication d'un panneau acoustique à double résonateur au moins, ce panneau comportant dans le sens de l'épaisseur au moins les couches suivantes et dans l'ordre suivant : une peau acoustique multiperforée, un nid d'abeilles primaire, un septum également multiperforé, un nid d'abeille secondaire et une peau pleine, le septum étant pris en sandwich entre les deux nids d'abeilles, le panneau étant assemblé par empilement et collage des constituants précités sur un moule à la forme du panneau à obtenir, une pression transversale étant exercée sur les constituants pendant le collage afin de les plaquer les uns contre les autres ainsi que contre le moule.
Un tel panneau est remarquable en ce que le septum est obtenu pendant l'assemblage du panneau en disposant bord à bord une pluralité de pièces contre l'un des nid d'abeilles et en recouvrant lesdites pièces ainsi disposées par l'autre nid d'abeilles, ces pièces étant découpées dans un feuillard souple, ces pièces étant définies pour permettre, avec une flexion appropriée, l'approximation de la forme finale du septum assemblé par des surfaces courbes développables et sensiblement jointives entre elles, l'erreur maximale étant notée E, la pression transversale provoquant ensuite la déformation des pièces pour les amener à la forme finale du septum, E ayant une valeur suffisamment faible pour éviter le plissement et le déchirement des pièces pendant cette déformation.

On comprend que la présente invention met à profit le fait que le septum ne participe que très peu à la résistance du panneau. Ainsi.
L'approximation de la forme du septum par une pluralité de surfaces élémentaires développables permet de découper les pièces du septum dans du feuillard, c'est à dire du matériau en feuille mince et souple, le perçage des trous du septum pouvant alors être effectué avant l'assemblage et avantageusement à plat. Le perçage est dans ces conditions rapide et peu coûteux car il peut être effectué sur une simple machine trois axes universelle ou sur une machine spécialisée, l'automatisation étant dans les deux cas très simplifiée.
Au début de la compression transversale, l'approximation de la forme du septum par des surfaces élémentaires développables permet de faire fléchir sans contraintes les pièces pour approcher la forme du septum jusqu'à la valeur E prés.
En poursuivant la compression, les pièces prennent leur forme définitive donnée par le moule, compte tenu évidemment de l'épaisseur des couches présentes entre le moule et le septum. Cette mise en forme provoque cependant des contraintes sur des pièces, lorsque la forme finale du septum n'est pas développable, car les distances relatives entre des points géométriques quelconques sur les pièces sont susceptibles de varier. L'opérateur définit les pièces pour limiter la valeur de E et par répercussion les contraintes générées sur les pièces afin de ne pas en provoquer le plissement ou le déchirement, voire de provoquer l'écrasement localisé d'un nid d'abeilles. La valeur de E est déterminée expérimentalement car elle dépend de nombreux paramètres, notamment de la forme réelle du panneau, des propriétés du matériau constituant le septum et des orientations des fibres de renfort le constituant. A noter que le matériau du septum peut fluer pendant le cycle thermique de l'assemblage, ce qui réduit les contraintes résiduelles subsistant dans le septum après l'assemblage. En pratique, E peut être compris entre 2mm et 2,5mm dans le cas des demi-coquilles de la partie inverseur de poussée de la nacelle.

Avantageusement, l'erreur maximale E a une valeur suffisante pour que la surface totale des alvéoles de chaque nid d'abeilles situées complètement en regard des pièces soit au moins égale à 90% de la surface totale du panneau. On comprend en effet qu'il subsiste inévitablement un espace entre les bords de deux pièces adjacentes, cet espace altérant les propriétés acoustiques des cellules du nid d'abeilles situées sur cet espace. En d'autres termes, seules les alvéoles qui sont complètement sur une pièce et qui ne débordent donc pas de cette pièce sont efficaces pour atténuer le son. L'homme du métier donnera en conséquence à E la plus grande valeur possible compatible avec les contraintes précédentes afin de limiter le nombre de pièces constituant le septum et, par répercussion, la fraction affectée de la surface du panneau.

Avantageusement encore, le nid d'abeilles disposé sur le moule juste avant le septum a sa surface au contact du septum préencollée avec une colle ayant un pouvoir adhésif au moment où on applique les pièces du septum sur ce nid d'abeilles. Par le terme "pouvoir adhésif', on entend que la colle est susceptible de retenir immédiatement et au moins temporairement les pièces appliquées sur le nid d'abeilles, afin de les maintenir les pièces en place pendant l'assemblage.
Avantageusement, ce pouvoir adhésif permet également d'éventuels enlèvements ou déplacements des pièces avec un effort limité, afin que l'opérateur puisse ajuster avec précision la position des pièces les unes par rapport aux autres pendant leur mise en place sur le nid d'abeilles.

Avantageusement encore :
(a) un septum divisé en pièces et les deux nids d'abeilles l'entourant sont assemblés entre eux séparément par empilage et collage sur un moule, le moule ayant une forme appropriée pour donner au septum sa forme définitive, compte tenu évidemment des couches disposées entre le moule et le septum, une pression transversale étant également exercée sur ces constituants pendant le collage ;
(b) on effectue ensuite un contrôle du taux d'obturation des trous du septum par la colle ;
(c) et on poursuit ensuite l'assemblage du panneau, c'est à dire la mise en place et le collage des couches restantes.
   On comprend que, après cet assemblage intermédiaire, le septum est accessible et visible de l'extérieur à travers les alvéoles d'un nid d'abeilles et ceci permet de vérifier que la proportion des trous du septum obturés par la colle est bien celle qui était prévue, les propriétés acoustiques du panneau en dépendant. La vérification peut être effectuée par voie optique ou pneumatique. On comprend qu'un tel contrôle n'est plus possible après que le panneau ait été entièrement assemblé, car les alvéoles entourant le septum sont recouvertes par les peaux.

Les pièces constituant le septum peuvent être découpées dans un feuillard pré-perforé entièrement ou pré-perforé seulement dans les zones qui constitueront ces pièces. Dans une forme particulière de mise en oeuvre, les pièces sont perforées après leur découpe et préalablement à leur assemblage sur un nid d'abeille.

### Description des figures

La figure 1 illustre la structure du panneau par une vue partielle en coupe ainsi que le moule.

La figure 2 illustre la forme du panneau acoustique et plus particulièrement du septum dans le cas d'une demi coquille d'inverseur, ainsi que la définition des pièces du septum.

La figure 3 illustre les pièces du septum découpées dans un feuillard.

La figure 4 illustre l'approximation effectuée pour définir les pièces du septum, l'erreur entre la forme finale et la forme approchée développable ayant été agrandie par mesure de clarté.

### Description détaillée

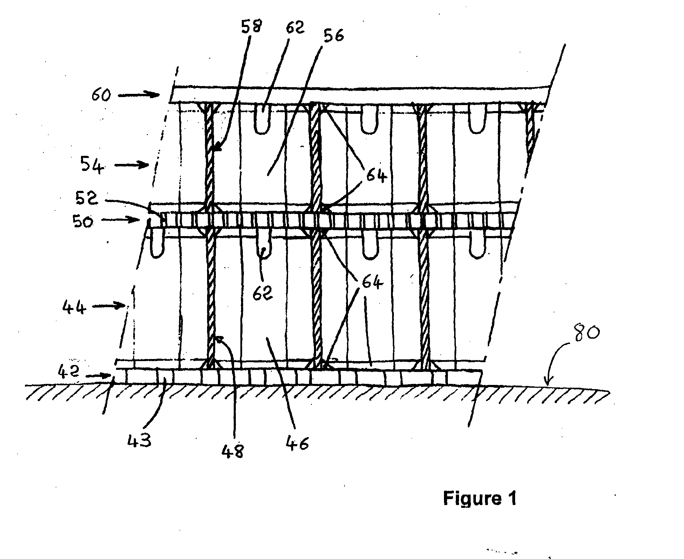

On se reportera en premier lieu à la figure 1. Le panneau acoustique 40 est dans cet exemple à double résonateur et présente une structure stratifiée comportant successivement dans le sens de l'épaisseur une première peau 42 perforée dite acoustique, un premier nid d'abeille 44 dit primaire, un septum 50 micro perforé, un second nid d'abeilles 54 dit secondaire et une peau pleine 60.

La peau acoustique 42 est en composite organique constitué de trois à dix couches de tissu de fibres de Kevlar ou de carbone noyés dans une résine époxyde durcie par polymérisation. La peau acoustique 42 est évidemment au contact de l'air 36 circulant dans la veine 22 et elle est traversée par une pluralité de trous 43 ayant un diamètre de 1,5mm avec une densité de perforation de l'ordre de 100 000 trous/m².

Le nid d'abeilles primaire 44 comporte des alvéoles 46 le traversant dans le sens de l'épaisseur, ces alvéoles 46 étant séparées par des cloisons 48 minces réalisées généralement en feuillard d'aluminium.

Le septum 50 est en composite organique comportant de une à trois couches de tissus de fibre de verre noyés dans une résine époxyde durcie par polymérisation. Le septum est traversé par une pluralité de trous 52 dont le diamètre est de 0,3mm avec une densité de perforation de l'ordre de 800 000 trous/m².

Le nid d'abeille secondaire 54 est semblable au nid d'abeille primaire 44 et on référencera 56 et 58 respectivement ses alvéoles et ses cloisons.

La peau pleine 60 est semblable à la peau acoustique 40 mais elle ne comporte pas de trous.

Les différentes couches 42, 44, 50, 54 et 60 sont maintenues assemblées entre elles par de la colle 64.

La fabrication de la peau acoustique 42 en matériau composite organique est conventionnelle et comporte les opérations successives de moulage, de détourage, d'usinage et de perçage suivantes bien connues de l'homme du métier.
Pour mémoire, le moulage consiste succinctement à superposer les couches de tissu de renfort sur un moule, le tissu étant préalablement imprégné de résine époxyde, le moule étant à la forme de la pièce à obtenir, en l'occurrence la peau acoustique, et à soumettre les couches de tissu à un cycle thermique sous pression en autoclave pour simultanément presser les couches de tissu contre le moule et pour assurer le durcissement par polymérisation de la résine. Aujourd'hui, les tissus sont commercialisés déjà pré-imprégnés de résine polymérisable. La pièce ainsi obtenue est relativement rigide mais est mince et susceptible de se déformer par flexion.
L'opération de perçage est longue et coûteuse. La pièce est disposée sur un support qui la maintient dans l'espace sans qu'elle puisse se déformer et le perçage est effectué au foret sur une machine "cinq axes" à commande numérique, ce type de machine étant le seul à permettre d'amener l'instrument de perçage avec l'orientation appropriée en tous points de la pièce.

La fabrication de la peau pleine 60 comporte les opérations de moulage et de détourage qui viennent d'être décrites pour la fabrication de la peau acoustique.

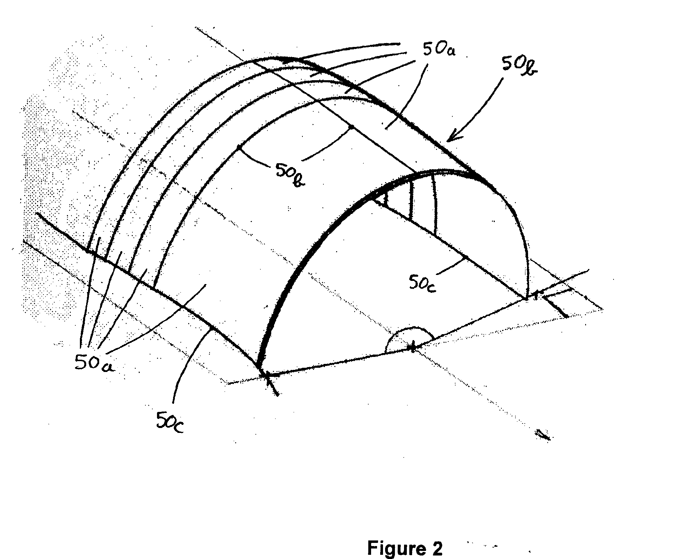

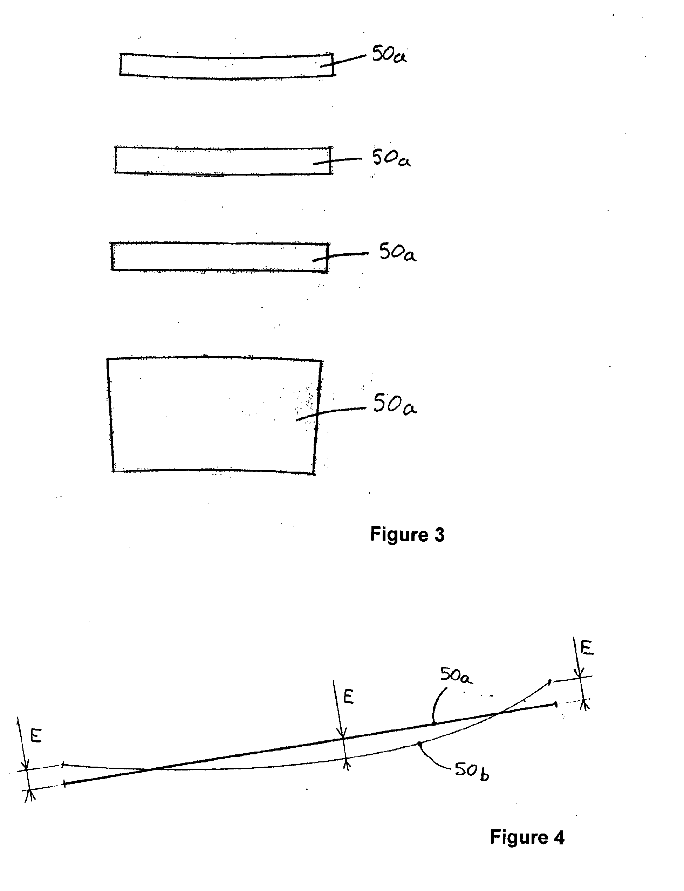

On se reportera maintenant aux figures 2 et 3. On découpe dans un feuillard en matériau composite organique les différentes pièces 50a dont l'assemblage bord à bord et la mise en forme permettra de constituer le septum 50. Les pièces 50a sont ensuite disposées à plat sur une table plane appropriée et les trous 52 du septum 50 sont percés par faisceau laser à l'aide d'une simple machine à commande numérique du type "trois axes". Le septum sera avantageusement réalisé en matériau composite constitué de tissus de fibre de verre noyés dans une résine époxyde, la fibre de verre permettant une perforation par laser plus nette des trous.

On se reportera maintenant aux figures 1, 2 et 3. L'assemblage du panneau 40 comporte les opérations suivantes dans lesquelles les colles employées sont des colles à haute résistance et durcies par polymérisation à chaud, soit :
1. Encollage d'une face de la peau acoustique 42 et mise en place de cette peau 42 sur un moule 80, la face encollée étant tournée dans la direction opposée au moule 80, le moule 80 étant à la forme du panneau 40, c'est à dire ayant une forme complémentaire à celle de la face externe de la peau acoustique 42 après assemblage du panneau 40.
2. Encollage d'une face du nid d'abeilles primaire 44 et application de ce nid d'abeilles primaire 44 sur la face elle-même encollée de la peau acoustique 42, la face encollée du nid d'abeilles primaire 44 étant par conséquent tournée dans la direction opposée au moule 80 et à la peau acoustique 42. La colle employée présente à ce stade des propriétés adhésives, c'est à dire qu'elle est susceptible de retenir des objet suffisamment léger appliqués contre elle, en l'occurrence les pièces 50a du septum 50. L'encollage peut être effectué par exemple en appliquant sur cette face une pellicule de colle appropriée et en exposant cette pellicule de colle à une source de chaleur, par exemple un flux d'air chaud ou le rayonnement thermique d'éléments chauffants. Sous l'effet de la chaleur provoquant la réticulation de la colle, la pellicule de colle se déchire et se contracte pour s'agglutiner à l'extrémité des cloisons 48 du nid d'abeille primaire 44.
3. Application sur la face encollée du nid d'abeilles primaire 44 des différentes pièces 50a constituant le septum 50, ces pièces 50a étant disposées bord à bord dans leurs positions respectives avec un jeu juste suffisant pour que, après la compression ci-dessous, les bords des pièces 50a arrivent le plus près possible les uns des autres sans toutefois se chevaucher. Le pouvoir adhésif de la colle doit avantageusement permettre le retrait et la remise en place des pièces 50a afin de pouvoir disposer ces pièces 50a avec précision les unes par rapport aux autres pour reconstituer le septum 50.
4. Encollage d'une face du nid d'abeilles secondaire 54 et application de ce nid d'abeille secondaire 54 sur les pièces 50a du septum 50, la face encollée étant contre les pièces 50a du septum 50 et par conséquent tournée en direction du moule 80. Cet encollage peut être effectué par exemple comme l'encollage du nid d'abeilles primaire 44.
5. Encollage d'une face de la peau pleine 60 et application de cette peau pleine 60 sur le nid d'abeilles secondaire 54, la face encollée étant contre le nid d'abeilles secondaire 54 et par conséquent tournée en direction du moule 80.
6. L'ensemble ainsi constitué est ensuite mis en pression transversalement, c'est à dire dans le sens de l'épaisseur, et soumis à un cycle thermique en autoclave suivant les techniques habituelles du moulage dit "en vessie" des matériaux composites stratifiés.
A noter qu'avec certaines colles, l'opération d'encollage comprend également une opération de réticulation.
La pression transversale a pour effet de plaquer les différentes couches du panneau les unes contre les autres et contre le moule avec un double résultat : donner au panneau 40 sa forme définitive pendant le collage et permettre un collage homogène sur toute la surface du panneau. La pression transversale a également pour effet de déformer les pièces 50a entre le nid d'abeilles primaire 44 et le nid d'abeilles secondaire 54, cette déformation provoquant la mise en contact du septum avec les deux nids d'abeilles l'entourant, cette mise en contact s'effectuant sensiblement sur toute la surface du septum, et pour résultat de donner au septum 50 ainsi constitué sa forme définitive.
Le cycle thermique a pour effet de polymériser les colles et de lier définitivement entre elles les différentes couches constituant le panneau 40.

On se reportera maintenant aux figures 2, 3 et 4. La définition des pièces 50a du septum 50 n'est pas critique. En effet, chaque pièce 50a est définie pour permettre, avec une flexion appropriée, l'approximation par une surface développable de la forme théorique 50b du septum, l'erreur maximale étant notée E, l'ensemble des pièces 50a mises bord à bord et fléchies de manière appropriée permettant ainsi de constituer la forme du septum 50 complet avec cette erreur maximale E.
Le terme "surface développable" est pris au sens de la géométrie et signifie que cette surface peut être obtenue par la flexion d'une surface plane sans changer les distances relatives entre des points géométriques quelconques sur cette surface.
E doit être suffisant pour limiter le nombre de pièces 50a et par répercussion la longueur totale des bords adjacents 50c des pièces 50a. En effet, il subsiste un espace inévitable entre les bords adjacents des pièces 50a, et les alvéoles 46 qui se trouvent au dessus de ces espaces voient leurs propriétés acoustiques diminuées. C'est donc la surface non affectée du panneau qui est acoustiquement efficace, cette surface étant la somme des surfaces des alvéoles situées complètement en regard d'une pièce, c'est à dire qui ne débordent pas de cette pièce.
En pratique, l'homme du métier veillera à ce que cette surface non affectée soit au moins égale à 90% de la surface totale du panneau 40.

E doit cependant resté limité pour que les pièces 50a ne forment pas de plis et ne se déchirent pas sous l'effet de la pression exercée pendant le collage du septum avec les deux nids d'abeilles. En effet, cette déformation n'est généralement pas une flexion simple et les distances relatives entre des points géométriques quelconques des pièces est susceptible de varier. C'est le cas lorsque le septum dans sa forme finale n'est pas lui-même une surface développable telle un secteur de cylindre ou de tronc de cône.
A noter que les contraintes résiduelles du septum restent faibles car le matériau composite utilisé est relativement souple et il est susceptible de fluer partiellement pendant le cycle thermique en autoclave.

Le procédé décrit ci-dessus est donné à titre d'exemple et peut faire l'objet de variantes de mise en oeuvre sans sortir du cadre de l'invention ni de son esprit. Ainsi.

Les pièces 50a du septum peuvent être découpées dans du feuillard déjà entièrement percé. Cette solution est à priori plus coûteuse car les chutes seront également percées, mais elle peut s'avérer intéressante avec une machine spécialisée.

Les pièces 50a du septum peuvent également être découpées dans du feuillard percé aux seuls endroits où seront découpées les pièces, afin justement d'économiser le perçage dans les chutes.

L'assemblage peut être effectué dans l'ordre inverse, la peau pleine étant posée contre le moule et la peau acoustique étant à l'extérieur. A noter toutefois que la surface contre le moule présente un meilleur état de surface que la surface opposée au moule.

L'assemblage peut également être effectué en plusieurs étapes, par exemple pour effectuer un contrôle du taux d'obstruction des trous du septum par la colle assurant la liaison entre le septum et les deux nids d'abeilles.

L'invention est également applicable aux panneaux comportant N > 1 septum multiperforés pris en sandwich entre N + 1 nids d'abeilles, l'ensemble étant lui-même pris en sandwich entre une peau acoustique et Une peau pleine. C'est par exemple le cas des panneaux dit "à triple résonateur" comportant successivement dans le sens de l'épaisseur : une peau acoustique multiperforée, un premier nid d'abeille dit "primaire", un premier septum multiperforé dit "primaire", un second nid d'abeilles dit "secondaire", un second septum multiperforé dit "secondaire", un troisième nid d'abeilles dit "tertiaire" et enfin une peau pleine.

L'assemblage du panneau est effectué comme précédemment par empilement et collage de ses constituants, au moins un septum pouvant être constitué à partir de pièces élémentaires découpées dans du feuillard, ces pièces étant alors disposées sur le nid d'abeilles précédant le septum considéré sur le moule.

## Revendications

1. Procédé de fabrication d'un panneau acoustique à double résonateur au moins, ce panneau (40) comportant dans le sens de l'épaisseur et dans l'ordre suivant au moins les couches suivantes : une peau acoustique (42) multiperforée, un nid d'abeilles primaire (44), un septum (50) également multiperforé, un nid d'abeille secondaire (54) et une peau pleine (60), le septum (50) étant pris en sandwich entre les deux nids d'abeilles (44,54), le panneau (40) étant assemblé par empilement et collage des constituants (42,44,50,54,60) précités sur un moule (80) à la forme du panneau (40) à obtenir, une pression transversale étant exercée sur les constituants (42,44,50,54,60) pendant le collage afin de les plaquer les uns contre les autres ainsi que contre le moule (80), la forme finale du septum (50) dans le panneau assemblé (40) étant référencée (50b),
**caractérisé en ce que** le septum (50) est obtenu pendant l'assemblage du panneau (40) en disposant bord à bord une pluralité de pièces (50a) contre l'un des nid d'abeilles (44,54) et en recouvrant les pièces (50a) ainsi disposées par l'autre nid d'abeilles (54,44), les pièces (50a) étant découpées dans un feuillard souple, les pièces (50a) étant définies pour permettre, avec une flexion appropriée, l'approximation de la forme finale (50b) par des surfaces courbes développables et sensiblement jointives entre elles, l'erreur maximale étant notée E, la pression transversale provoquant ensuite la déformation des pièces (50a) pour les amener à la forme finale (50b), E ayant une valeur suffisamment faible pour éviter le plissement et le déchirement des pièces (50a) pendant cette déformation.

2. Procédé selon la revendication 1 **caractérisé en ce que** l'erreur maximale E a une valeur suffisante pour que la surface totale des alvéoles (46,56) de chaque nid d'abeilles situées complètement en regard des pièces (50a) soit au moins égale à 90% de la surface totale du panneau (40).

3. Procédé selon la revendication 1 ou 2 **caractérisé en ce que** l'erreur maximale E est comprise entre 2mm et 2,5mm.

4. Procédé selon l'une quelconque des revendications 1 à 3 **caractérisé en ce que** le nid d'abeilles (44,54) disposé sur le moule (80) juste avant le septum (50) a sa surface au contact du septum (50) préencollée avec une colle ayant un pouvoir adhésif au moment où on applique les pièces (50a) sur le nid d'abeilles (44,54).

5. Procédé selon la revendication 4 **caractérisé en ce que** le pouvoir adhésif de la colle autorise le décollement et le déplacement des pièces.

6. Procédé selon l'une quelconque des revendications 1 à 5 **caractérisé en ce que** :
(d) un septum (50) divisé en pièces (50a) et les deux nids d'abeilles (44,54) l'entourant sont assemblés entre eux séparément par empilage et collage sur un moule (80) à la forme du panneau (40), une pression transversale étant également exercée sur les constituants (50,50a,44,54) pendant le collage ;
(e) **en ce qu'**on effectue ensuite un contrôle du taux d'obturation des trous (52) du septum (50) par la colle ;
(f) et **en ce qu'**on poursuit ensuite l'assemblage du panneau (40).

7. Procédé selon l'une quelconque des revendications 1 à 6 **caractérisé en ce que** le septum (50) est découpé dans un feuillard pré-perforé.

8. Procédé selon la revendication 7 **caractérisé en ce que** feuillard est pré-perforé dans les zones constituant les pièces (50a) du septum (50) à constituer.

9. Procédé selon l'une quelconque des revendications 1 à 6 **caractérisé en ce que** les pièces (50a) sont perforées après leur découpe dans le feuillard et préalablement à leur assemblage sur un nid d'abeilles (44,54).

10. Procédé selon l'une quelconque des revendications 1 à 9 **caractérisé en ce** le sectum est réalisé avec du matériau composite constitué de tissus de fibre de verre noyés dans une résine époxyde.
